# EUROPEAN PATENT APPLICATION

(11) **EP 4 663 711 A1**
(43) Date of publication of application: **17.12.2025**
(21) Application number: 23920305.2
(22) Date of filing: 10.02.2023
(51) Int. Cl.: C09D 167/00, C09D 179/08, C09D 5/00, C09D 7/20, H01B 3/30, H01B 3/42, H01B 7/02, C08G 63/685, C08G 73/16, C08L 79/08

(54) **METHOD OF OBTAINING INSULATING COATING COMPOSITION, COATING COMPOSITION AND CONDUCTIVE MATERIALS COMPRISING THE SAME**

(71) Applicant: Weg Tintas LTDA, Caixa D'agua, SC 89270-000 Guaramirim (BR)
(72) Inventor: MEDEIROS, Cristiane, Jaraguá do Sul/SC 89251-610 (BR); DA COSTA, Priscila, Jaraguá do Sul/SC 89257-900 (BR)
(74) Representative: Clarke, Modet y Cía., S.L.
(86) International application number: PCT/BR2023/050048
(87) International publication number: WO 2024/164055

(57) **Abstract**

The present invention relates to a method of obtaining insulating coating material, coating composition and conductive materials comprising the same. In particular, this invention discloses a method of obtaining coating material comprising polyester and polyesterimide, without using cresol and derivatives as solvents. The formation of polyesterimide occurs in two steps - polyester formation followed by obtaining the imide moiety. Also claimed is the coating composition obtained by the present method and conductive material comprising said composition.

## Description

### Invention field

The present invention relates to a method of obtaining insulating coating material, coating composition and conductive materials comprising the same. In particular, this invention discloses a method of obtaining coating material comprising polyester and polyesterimide, without using cresol and derivatives as solvents. The formation of polyesterimide occurs in two steps - polyester formation followed by obtaining the imide moiety. Also claimed is the coating composition obtained by the present method and conductive material comprising said composition.

The process conditions allowed obtaining compositions containing unique characteristics; high solids content, low polydispersity index in addition to providing a substantially homogeneous surface coating.

### Invention background

In general, enameled wires are made up of a solid conductor, generally made of copper or aluminum, covered by an electro insulating film formed by a thermosetting polymeric material. Adjacent wires may be subjected to high voltage and/or pulsed loads; therefore, it is desirable that such films or coatings have a high resistance to partial discharge. In this context, resins based on polymeric materials are widely known for forming insulating coatings.

The resins used in the manufacture of enameled wires are dissolved in certain solvents (the system of which is called enamel). These consist of around 20 to 50% solids and 50 to 80% solvents and diluents. Solvents and diluents commonly used are cresolics (phenol, cresols, xylenol and alkylphenols) and derivatives of xylenes, alkylbenzenes and alcohols, respectively. The presence of diluents facilitates the evaporation of the solvent, reduces the viscosity of the enamel and consequently improves the quality of the coating.

Usual polymeric materials include polyesters, polyurethanes, polyimides, polyamide-imides, epoxies, vinylformaldehydes and polyesterimides due to their ability to withstand high temperatures, in continuous operation.

Polyesters are known for their low cost and easy handling. Despite being widely disseminated, they present several stability problems, generating surface defects and consequently, electrical leaks. For this reason, larger amounts of resin are often required to prevent the formation of flaws and cracks during or after the curing process.

Alternative proposals to overcome these limitations consist of the use of polyester modifying groups and special monomers for the formation of polymers, such as hydantoin. Another approach is to employ polyesterimide-based resins, which are more stable compared to polyester-based resins (BHANU, V. A. Polyester Wire Enamels - Reliable Coatings in the Wire Industry from the Beginning to Today. Macromolecular Materials and Engineering, volume 293, pages 340 to 249, 2008). On the other hand, the use of polyesterimides still has limitations related to cost and high toxicity, which makes large-scale applications unfeasible.

Particularly, the solvent system used for polyesterimide resin solutions increases the cost of packaging, transportation and storage. Solvent mixtures are usually used, comprising phenols and derivatives thereof, such as cresols, xylenols and aromatic hydrocarbons.

Several methodologies use cresol as a solvent, to promote the formation of polyesters and polyesterides. Its ability to solubilize polymers is particularly desirable, and it can be incorporated into resins at the end or during the production process. Such methodologies are described in a non-exhaustive manner in patents US 4384946, US 6211326, US 3919144, US 3859284 and CA 1103841. However, cresol and derivatives thereof have high toxicity and are therefore a substance that goes against the principles of Green Chemistry.

Several efforts were made to reduce the use of these solvents: reducing the amount of cresolic solvents using excess amounts of polyols (EP 0009653), aqueous reaction systems (US 4116941) or systems free of cresol and derivatives (DE 4133161 and US 7521498).

US 4117032, in its turn, discloses a process with excess polyols in the presence of cresylic acid, to disperse the catalyst. This reference details a two-step reaction for the formation of polyesterimide resins. In the first, the polyester is formed by the reaction of a mixture of glycol and triol with organic diacid, followed by the *in situ* addition of the imide-forming reagents, trimellitic anhydride and an aromatic diamine. To ensure stable solubility in aqueous solvent systems, the product is subsequently reacted with additional trimellitic anhydride. In the second reaction, a more random polymer is made by producing the imide and polyester segments at the same time by reacting a mixture of glycol and triol, a mixture of organic diacid and trimellitic anhydride, and diamine.

EP 0009653 describes a process comprising mixing an excess polyol component, a polyfunctional carboxylic compound, a diethylene glycol monoalkyl ether acetate and a catalyst. A fatty acid is preferably also included in the composition.

DE 4133161, in its turn, reports steps for the preparation of resins, free of cresol. The absence of phenolic solvents of any nature strongly impacts the solubility of polymers in the resin, generating greater polymeric heterogeneity (waste) and reducing the solids content of the final composition.

US 7521498 describes cresol-free enamels, in which at least 50% by weight of solvent/diluent consists of an aromatic monocyclic alkyl carboxylic acid ester or 3,5,5-trimethyl-2-cyclohexen-1-one or in a mixture of methyl benzoate and 3,5,5-trimethyl-2-cyclohexen-1-one. This reference supposedly overcomes the disadvantages identified in DE 4133161 related to solids content (obtaining compositions comprising 20 to 60% by weight is mentioned).

In this regard, it is worth highlighting that none of the examples of US 7521498 generate compositions with solids content above 40%. Furthermore, it is possible to observe that all embodiments require catalysts at different stages of the process - such as zinc acetate.

Such catalysts impact the linearity and, consequently, the homogeneity of the polymer by increasing the polydispersity index. This behavior is aggravated by the lack of selectivity - there is no direction for the production of specific groups of the polyesterimide polymer.

As a result, the process described in US 7521498 results in enamels with a high degree of surface defects. This impacts the insulation efficiency of the material, making it necessary to add greater amounts of the product to compensate for surface flaws and cracks. Furthermore, the process of US 7521498 involves the generation of methanol as a by-product of the reaction, a substance considered highly toxic. In contrast, in the present invention, only water is generated and/or released in the processing.

It is evident that the processes for obtaining coatings present several limitations in relation to the low solids content of the resin obtained and the high heterogeneity of residual monomers.

Therefore, there is a need for more effective methods that provide resins with greater homogeneity of content and adequate solids content, without incurring complex and economically unfeasible steps for production on an industrial scale.

### Objective of the invention

The process described by the present invention overcomes the disadvantages of the state of the art, by providing a method of obtaining coating material comprising polyester and polyesterimide, without using cresol and derivatives as solvents. The formation of polyesterimide occurs in two steps - polyester formation followed by obtaining the imide moiety. Also claimed is the coating composition obtained by the present method and conductive material comprising said composition.

The formation of polyester and polyesterimide in separate steps in a solid medium, associated with the use of catalysts and directional solvents, resulted in polymers with a more homogeneous molar mass, low polydispersity index and resins based on polyester and polyesterimide with high homogeneity in application.

### Brief description of the figures

Figure 1 illustrates a flowchart of the process steps.
Figure 2 shows the delta tangent analysis of a commercially available polyester-imide containing cresol.
Figure 3 illustrates the delta tangent analysis of the resin obtained by the present invention.

### Detailed description of the invention

The present invention comprises a method of obtaining an insulating coating composition comprising the steps of:
i) polyesterification reaction, by the formation of isolated polyester *in situ* in a solid medium by loading the reaction medium with monomers of at least one acidic component, in a concentration range of 5% to 10%; monomers of at least one alcoholic component, in a range of 3% to 25%; and at least one catalyst, in a range of 0.01% to 1.0%, under heating from 180 to 260 °C until an acid number of less than 5 mgKOH/g is reached;
ii) polycondensation reaction comprising:
   a) formation of the imide moiety *in situ* in a solid medium by loading the reaction medium with monomers of at least one acidic component, in a range of 8% to 18%; and monomers of at least one amine component, in a range of 2% to 10% under heating from 180 to 260 °C, for 1 to 8 hours;
   b) cooling the medium to a temperature range between 120 and 180 °C, with new loading of the reaction medium with monomers of at least one acidic component, in a range of 8% to 18%; and monomers of at least one amine component, in a range of 2% to 10%, until the medium reaches a kinematic viscosity in the range of 50 to 80 seconds;
iii) dissolving the material resulting from step II, preferably using at least one organic solvent chosen from phenol, glycol ethers, dimethylglycol, ethylglycol, isopropylglycol, butylglycol, methyldiglycol, ethyldiglycol, butyldiglycol, 3,5,5-trimethyl-2-cyclohexen-1-one, alkylbenzene, phenyl glycol, glycol ether esters, methyl glycol acetate, butyl glycol acetate, methoxypropylacetate;
iv) additivation by incorporating at least one additive at a temperature below 100 °C, preferably selected from a curing additive, chain-increasing additive and antioxidant additive;
v) adjustment of viscosity by adding an organic solvent, diluent or a combination of them, at a temperature below 100 °C.

The following expressions will be defined for clarification purposes. Obviously, such terms should not be interpreted restrictively, but rather with the aim of contextualizing the proposed invention.

The term "wire enamel" should be interpreted as a composition comprising polymeric macromolecules dissolved in appropriate solvents. When applied to the surface of a material, it forms a film or coating layer, providing electrical insulation, high thermal and mechanical stability, flexibility and resistance to humidity.

In the present invention, the term "acidic component" should be understood as organic acids and/or acid anhydrides, and interpreted in accordance with its IUPAC definition, as compounds having two acyl groups linked to the same oxygen atom. Acidic components in accordance with the present invention may include terephthalic acid, tricarboxylic acid anhydride such as trimellitic anhydride (TMA), 3,4,4'-benzophenone tricarboxylic acid anhydride or 3,4,4'-biphenyl tricarboxylic acid anhydride.

Additional components include tetracarboxylic dianhydride in combination with tricarboxylic acid anhydride. Among the tetracarboxylic dianhydrides, aromatic tetracarboxylic dianhydrides can be used, such as pyromellitic dianhydride (PMDA), 3,3'4,4'-benzophenone-tetracarboxydidianhydride (BTDA), boxylic dianhydride (DSDA), 4,4'-oxydiphalic dianhydride (ODPA) and 3,3',4,4'-diphenylsulfone tetracarboxylic dianhydride, among others. Additionally, alicyclic tetracarboxylic dianhydride, such as butane tetracarboxylic dianhydride or oralicyclic tetracarboxylic dianhydride, which is a hydrogenated aromatic tetracarboxylic dianhydride, can be used in combination with carboxylic acid ester anhydride.

The term "alcoholic component" should be interpreted, according to the present invention, as a polyhydric alcohol.

Alcoholic components include, non-restrictively, alcohols such as dihydric alcohol (ethylene glycol EG), neopentyl glycol, 1,4-butanediol, 1,6-hexanediol, or 1,6-cyclohexane dimethanol; (trihydric alcohols, such as: glycerin; trimethylolpropane; or pentaerythritol) and alcohols with an isocyanurate ring (tris(hydroxymethyl)isocyanurate; tris(2-hydroxyethyl)isocyanurate (THEIC); tris(3-hydroxypropyl) isocyanurate, among others).

The term "catalyst" must be interpreted in accordance with the literature definition, that is, as an element that increases the speed of a reaction, without being consumed. Non-exhaustive examples of catalysts used in the present invention are: heavy metal salts, organic titanates, cerium compounds and also organic acids. Other possible catalysts are: tin catalysts or other metal catalysts; amine catalysts such as diazabicyclo-undecene, diazabicyclo-octane catalysts; or other amines known to those skilled in the art, which can be used individually or in mixtures.

Examples of heavy metal salts are lead acetate and zinc acetate, and the coating composition obtained by the process of the present invention does not include heavy metals, since no raw material used in the solution process contains them.

Examples of titanates that can be employed include tetramethyl titanate, tetraethyl titanate, tetraisopropyl titanate, tetrapropyl titanate, tetrabutyl titanate, tetra-amyl titanate, tetrahexyl titanate, diisopropyl titanate, dibutyl titanate or amyl titanates, such as tetraphenyl titanate, tetracresyl titanate, tetrahexyl titanate, triethanolamine titanate, among others. An example of organic acids that can be preferentially used is p-toluene sulfonic acid.

The term "amine component" should be understood as the amines that can be used in the process. In this regard, preference is given to the use of aromatic diamine with three or more aromatic rings.

However, several other amines can be used for the amidation process, such as primary aliphatic diamines (ethylene diamine, propylene diamine, tetramethylene diamine, pentamethylene diamine, hexamethylene diamine, cycloaliphatic diamines, such as 4,4'-dicyclohexylmethane diamine, and triamines); secondary amines; aromatic amines (diaminodiphenyl methane, phenylenediamine, polynuclear aromatic amines or toluene diamines); functionalized amines (amino alcohols, monoethanol amines, monopropanol amines), amino acids (such as glycine), aminocaproic acids or aminobenzoic acids and their esters; and amide C-carboxy-3-oxocycloalkyl carboxylic acid groups that can also be incorporated directly into the component.

Additionally, diamine components including aromatic diamine with three or more aromatic rings can be used to reduce the relative permittivity of the insulating material in a dry state, as well as in a moisture absorption state, while maintaining heat resistance. Non-exhaustive examples of such aromatic diamines with three or more aromatic rings include: 2,2-bis(4-(4-aminophenoxy) phenyl propane (BAPP); bis4-(4-aminophenoxy)phenylsulfone (BAPS), bis 4-(4-aminophenoxy)phenylether (BAPE), fluorenediamine (FDA), 4,4'-bis(4-aminophenoxy)bisphenyl (BAPB) and 1,4-bis(4-aminophenoxy)benzene, isomers thereof, and a combination of these amines.

Furthermore, for the diamine component, it is possible to use an aromatic diamine, such as: 4,4'-diaminodiphenylmethane (DAM) or 4,4'-diaminodiphenyl ether (DDE) in combination with the aromatic diamine having three or more aromatics rings. However, the process should not be limited specifically to these examples.

The term "organic solvents" refers to a group of compounds, whose molecules are essentially formed by carbon and hydrogen, and which have defined physicochemical properties. In the context of the present invention, the interest of these organic solvents is directed to the ability to dissolve the polymer obtained in the process, which is an important component of resins and enamels for wires.

In this way, compounds such as phenol, glycol ethers, dimethyl glycol, ethyl glycol, isopropyl glycol, butyl glycol, methyldiglycol, ethyldiglycol, butyldiglycol, 3,5,5-trimethyl-2-cyclohexen-1-one, alkylbenzene, phenylglycol, esters of glycol ether (for example, methyl glycol acetate, butyl glycol acetate, methoxy propyl acetate), are considered organic solvents, according to the present invention.

Other examples of organic solvents are cyclic carbonates such as, for example, polypropylene carbonate, phenylpolyglycol ether, cyclic esters (for example, gamma-butyrolactone), dimethylformamide, N,N-dimethylacetamide and N-methylpyrrolidone.

Furthermore, it is also possible to use aromatic solvents, such as benzyl alcohol, alone or in combination with other solvents mentioned.

Additionally, organic solvents can be replaced in part by cosolvents. It is preferable to use pure solvent or pure solvent mixture, or solvents containing up to 40% by weight, based on their total weight, of co-solvents.

Along with these organic solvents, diluents can also be used. This approach is quite common in the processes for preparing enamels based on polyester and polyesterimide. In this regard, while solvents are suitable for promoting complete dissolution of thread enamel, diluents are not employed for this purpose.

The term "diluents", according to the present invention, should be interpreted as substances suitable for diluting a resin that is already formed, and are organic solvents or a mixture of organic solvents. These have the advantage of adapting the viscosity of the resin solutions and are usually added at the end of the process. The reasons for its addition are to lower the price of production by replacing high-cost special solvents and to ensure uniform evaporation behavior during the curing of the enamel.

Non-exhaustive examples of diluents are glycol ethers, isopropyl glycol, butyl glycol, methyldiglycol, ethyldiglycol, butyldiglycol, 3,5,5-trimethyl-2-cyclohexen-1-one, alkylbenzene.

The term "additive" is used in the context of the invention as any component capable of modifying the interaction between the components and helping to direct the formation of a more specific polymer of interest in the process. In the case of the present invention, the use of additives is essential to increase the stability and reduce the variation in molecular mass of said polymers, in addition to modifications and improvements in terms of rheology and coating of the wires.

Preferred additives that can be used in the present invention are curing, chain-enhancing and antioxidant additives. A preferred curing additive is tetrabutyl titanate. A prepolymer additive to provide chain increase is preferably made based on toluene diisocyanate. A preferred antioxidant additive is a phenolic resin.

Furthermore, other types of additives can be used, these being selected from defoamers, dispersants, levelers, acidity regulators, stabilizers, among others.

The term "curing" should be interpreted in the context of the present invention as a chemical process of converting a prepolymer or polymer into a polymer of greater molar mass and connectivity and, finally, into a network.

The term "polydispersity index" should be understood as a description of the distribution of the molecular mass of a polymer. In this regard, a higher polydispersity index necessarily implies a high molecular mass distribution of a polymer. It is important to highlight that, in a polymer synthesis process, it is interesting that this index is not high, otherwise there is a strong indication of considerable heterogeneity between the molecules, which suggests that the synthesis process was poorly directed and inefficient, forming non-specific molecules through non-directed reactions.

The present invention relates to the process of producing enamels for yarns based on polyester and polyesterimide free from the use of cresol at any stage of said process. The synthesis occurs in two steps, complete formation of the polyester followed by the formation of the imide moiety.

A brief description of the steps of the method consists of the formation of isolated polyester; formation of the imide moiety; dissolution of the final polymer; additivation; and viscosity adjustment.

The polymer is generated through an *in situ* reaction in a solid medium, without the addition of any solvent to the reaction medium. Furthermore, this polymer presents only water as a by-product of the reaction, without the generation of residual organic solvent.

Additionally, another essential characteristic of the process is that the formation of polyesterimide occurs in two stages, without the need for solvents. In this way, dissolution and/or dilution are carried out only after the polymer conformation is complete. Thus, the molecular mass is dependent only on the polymer obtained in the initial stages. As a result, at the end of the process, the evaporation of solvent and diluents occurs linearly, providing a cured coating without defects and improved electrical properties.

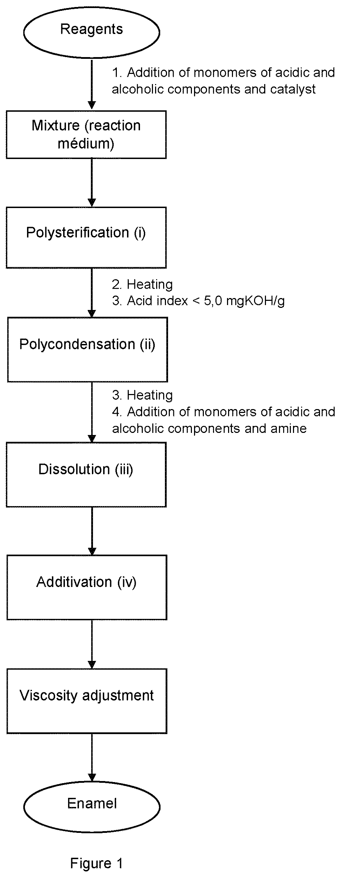

In the context of the present invention, all amounts, unless otherwise indicated, should be understood as being by weight. The initial reactants comprise an alcoholic monomer, an acidic component and a catalyst. These can be added to any suitable reaction medium, such as glass containers, stainless steel or any other metal used in the synthesis of polyesters, polyimides and polyesterimides. The specific conditions of the above steps will be detailed below together with Figure 1.

### i. Polyesterification reaction

The formation of polyester is carried out by loading the reaction medium with monomers of at least one acidic component, in a concentration range of 5% to 10%; monomers of at least one alcoholic component, in a range of 3% to 25%; and at least one catalyst, in a range of 0.01% to 1.0%.

Once the reaction medium is loaded, heating is carried out at a temperature range of 180 to 260 °C, which is maintained until an acidity value of less than 5 mgKOH/g is reached. Carrying out this step in isolated way and in the absence of any solvent is important to ensure adequate direction of the synthesis of the polyester chain. As a consequence, the polyester formed has greater homogeneity and linearity which, consequently, leads to reduced polydispersity indices.

### ii. Polycondensation reaction

After obtaining the polyester from step i, a new loading of materials is carried out in the same reaction medium. For the formation of the imide moiety, the charged materials are monomers of at least one acidic component, in a range of 8% to 18%; and monomers of at least one amine component, in a range of 2 to 10%.

Next, the reaction medium is heated to a temperature of 160 to 220 °C, for 1 to 8 hours.

Afterwards, the medium is cooled and maintained at a temperature range of 120 to 180 °C. A new loading of materials follows, namely monomers of at least one acidic component, in a concentration range of 8% to 18%; and monomers of at least one amine component, in a concentration range of 2% to 10%. The medium must be maintained under these conditions until it reaches a kinematic viscosity, in the range of 50 to 80 seconds.

The content of imide groups should preferably be between 0.02 and 0.8 mol.

The loading of materials in this stage of the process must be carried out in two phases and also in the absence of solvents. These conditions are important because, in the same way as in step i, there is adequate direction of the synthesis of the polymer chain of interest.

As a consequence, the polyesterimide formed has greater material homogeneity and linearity which, consequently, leads to obtaining low polydispersity indices. Furthermore, given the formation of the polymer in a solid medium, the content of homogeneous polymers is extremely high.

The homogeneity of the polymers results in several advantages, one of the main ones being the high quality of the enamel after the curing process.

### iii. Dissolution

The material resulting from step ii is solubilized using at least one of the previously mentioned solvents, with the exception of cresol and derivatives thereof. It is important to highlight that the dissolution is carried out after the completion of the polymerization process and formation of polyesterimide, that is, steps i and ii are carried out in a solid medium.

At this stage, the appropriate choice of the organic solvent or mixture of organic solvents is essential, as it leads to obtaining very well-defined evaporation curves, where the course of evaporation of the constantly changing azeotrope is more harmonious. Consequently, the appearance of surface defects in the cured enamel film due to abrupt changes is strongly suppressed.

### iv. Additivation

At least one additive is incorporated in this step at a temperature below 100 °C.

These additives are introduced with the aim of blocking free hydroxyls and other reactive groups, consequently providing greater stability to the polyester and polyesterimide polymers formed until the enamel cures.

Finally, the viscosity is adjusted by adding at least one organic solvent, diluent or a combination of them at a temperature below 100 °C, aiming to achieve a specific viscosity.

The present invention further comprises an insulating coating composition, obtained by the method as described, which comprises polyester and polyesterimide, in a ratio of polyester and imide groups in the range of 60:40 to 80:20, respectively.

The product consisting of such a composition preferably has an average numerical molar mass (Mn) greater than 5000.

The product consisting of such a composition preferably has a polydispersity index greater than 1.10.

The product consisting of such a composition preferably has a solids content between 34.0 and 40.0%.

Furthermore, the present invention further comprises a conductive material, preferably cylindrical in shape, which comprises a coating of a composition as defined above. Said conductive material has as its main form of presentation an enamelled wire.

The material resulting from this production process has the formulation described in Table 1.

**Table 1: Enamel formulation**

| **Component** | **% by weight** |
|---|---|
| Acid | 2 to 30 |
| Alcohol | 5 to 50 |
| Amine | 3 to 35 |
| Catalyst | 0.01 to 2.5 |
| Solvent | 15 to 75 |
| Additive | 1 to 10 |

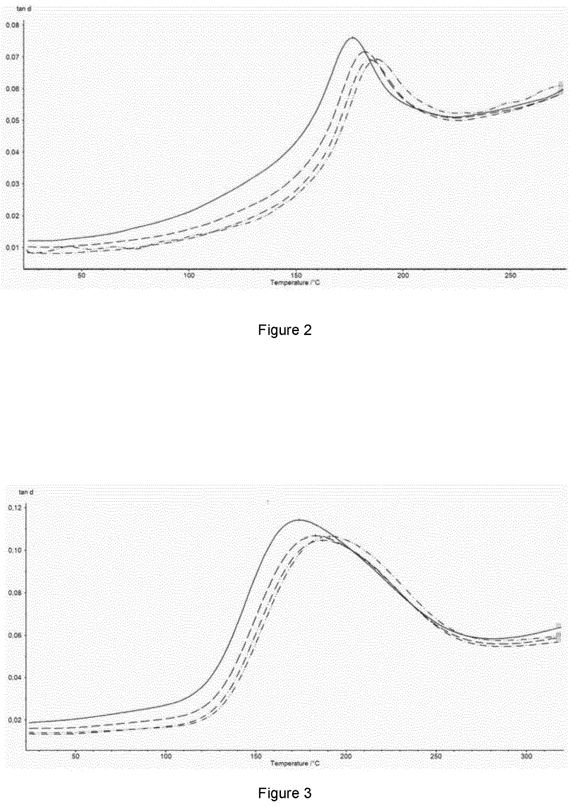

Figures 2 and 3 show a comparison between a polyester on the market and a polyester obtained from the process described above. Polyester and polyesterimide-based enamels are suitable for application to wires, preferably with enameling machines, and obtaining enamelled wires with superior electrical properties compared to those available in the state of the art.

### Example 1

The reaction medium was loaded with the components indicated in Table 1 as follows:

**Table 1: Components for polyester synthesis.**

| **Concentration kg/L** | **Component** |
|---|---|
| 7.0 | Monoethylene glycol monomer |
| 9.0 | Tris hydroxy ethyl isocyanurate monomer |
| 0.05 | Butyl Stannoic Acid Catalyst |
| 7.0 | Terephthalic acid reagent |

These components were then heated to 240 °C and were maintained until an acid number of less than 5 mgKOH/g was reached.

After this step, the medium with the polyester was then loaded with materials for the synthesis of the imide moiety, indicated in Table 2.

**Table 2: Components for imide moiety synthesis.**

| **Concentration kg/L** | **Component** |
|---|---|
| 5.7 | Reagent Trimellitic anhydride |
| 3.0 | 4,4-diaminodiphenylmethane reagent |

The medium was heated, reaching a temperature of 200 °C, maintained for 30 minutes. Sequentially, the medium was cooled to 160 °C and a new loading of materials was carried out, with the same compounds and same amounts as in the first phase of this stage, to complete the process of formation of the imide moiety. The conditions were maintained until the kinematic viscosity at 30 °C of 60 to 65 seconds was reached, which was determined by diluting a 10-gram aliquot of the product in 15 grams of n-methylpyrrolidone.

After the formation of the imide moiety was completed, the resulting polymeric material was dissolved in phenylpolyglycol ether.

At the end of dissolution, the additives were added, as shown in Table 3:

**Table 3: Additive components**

| **Concentration kg/L** | **Component** |
|---|---|
| 0.6 | Tetrabutyl titanate |
| 0.1 | Diluted acrylic resin solution |
| 0.06 | Antioxidant additive |
| 0.2 | Phenolic resin |
| 1.0 | Reactive phenolic resin based on bisphenol/ formaldehyde |
| 1.0 | Hydroxyl blocking toluene diisocyanate-based resin |

After the additivation stage was completed, the resin was diluted with the solvents mentioned in Table 4.

**Table 4: Solvents used in dissolution**

| **Concentration kg/L** | **Component** |
|---|---|
| 0.7 | Isobutanol |
| 0.1 | 3,5,5-trimethyl-2-cyclohexen-1-one |
| 0.06 | Alkylbenzene |
| 0.2 | Phenyl Polyglycol Ether |

The characterization of the resulting products was based on the evaluation of the weight-average molecular mass (Mw) and numerical average molecular mass (Mn), as well as the polydispersity index (Mw/Mn). The values are represented in Table 5, below.

**Table 5: Numerical average molecular mass (Mn), weight average molecular mass (Mw), and polydispersity index (Mw/Mn).**

| **Mn (g/mol)** | **Mw (g/mol)** | **Mw/Mn** |
|---|---|---|
| 5355 | 6966 | 1.3 |
| 5843 | 7571 | 1.295 |

### Dynamo-mechanical analysis of the resin

The result of the dynamo-mechanical analysis (DMA) is shown in Figure 3. The test was carried out in accordance with ASTM D7028 and ASTM D4065 standards and provides the relationship between the loss modulus and the storage modulus (delta tangent), whose maximum value characterizes the glass transition temperature (Tg).

By comparing the tests in Figures 2 and 3, it is possible to identify the superiority of the polyester generated by the present method. It can be seen that the difference between the two samples is relatively low from the point of view of the loss factor (delta tangent). However, it is notable that it achieves thermal properties so similar to the cresol material.

Other results obtained from tests with the resulting product were:
Kinematic viscosity: 60 to 63 seconds;
Rotational Viscosity: 600 to 700 cPs;
Solid content: 36 to 37%.

### Example 2

The reaction medium was loaded with the components indicated in Table 6 as follows:

**Table 6: Components for the polyester synthesis.**

| **Concentration (kg/L)** | **Component** |
|---|---|
| 6.0 | Monoethylene glycol |
| 8.0 | Tris hydroxy ethyl isocyanurate |
| 0.01 | Butyl Stanoic Acid |
| 6.5 | Terephthalate acid |

These components were heated to 240 °C and were maintained until an acid number of less than 5 mgKOH/g was reached. After this step, the medium with the polyester was then loaded with materials for the synthesis of the imide moiety, indicated in Table 7.

**Table 7: Components for the imide moiety synthesis**

| **Concentration (kg/L)** | **Component** |
|---|---|
| 10.0 | Trimellitic anhydride |
| 5.0 | 4,4-diaminodiphenylmethane |

The medium was heated, reaching a temperature of 200 °C, maintained for 30 minutes. Sequentially, the medium was cooled to 160 °C and a new loading of materials was carried out, with the same compounds and the same amounts as in the first phase of this stage, to complete the process of formation of the imide moiety. Conditions were maintained until kinematic viscosity of 60 to 65 seconds was reached.

After the formation of the imide moiety was completed, the resulting polymeric material was dissolved in phenylpolyglycol ether.

At the end of dissolution, the additives were added, as shown in Table 8:

**Table 8: Additive components**

| **Concentration (kg/L)** | **Component** |
|---|---|
| 0.6 | Tetrabutyl titanate |
| 0.1 | Diluted acrylic resin solution |
| 0.6 | Antioxidant additive |
| 0.2 | Phenolic resin |
| 0.6 | Reactive phenolic resin based on bisphenol/ formaldehyde |

After the additivation stage was completed, the resin was diluted with the solvents mentioned in Table 9.

**Table 9: Solvents used in dissolution**

| **Concentration (kg/L)** | **Component** |
|---|---|
| 37 | Phenyl Polyglycol Ether |
| 0.5 | Isobutanol |
| 6.50 | 3,5,5-trimethyl-2-cyclohexen-1-one |
| 19.0 | Alkylbenzene |

The results obtained from tests with the resulting product were:

| |
|---|
| • Kinematic viscosity: 60 to 63 seconds; |
| • Rotational Viscosity: 600 to 700 cPs; |
| • Solid content: 36 to 37%; |
| • Copper plate appearance: without craters and spots; |
| • Glass transition temperature: 176,4 °C. |

### Example 3

The reaction medium was loaded with the components mentioned in Table 10 as follows:

**Table 10: Components for polyester synthesis**

| **Concentration (kg/L)** | **Component** |
|---|---|
| 3.0 | Monoethylene glycol |
| 19.0 | Tris hydroxy ethyl isocyanurate |
| 0.01 | Butyl Stanoic Acid |
| 7.5 | terephthalate acid |

These components were heated to 240 °C and were maintained until an acid number of less than 5 mgKOH/g was reached. After this step, the medium with the polyester was then loaded with materials for the synthesis of the imide moiety, indicated in Table 11.

**Table 11: Components for imide moiety**

| **Concentration (kg/L)** | **Component** |
|---|---|
| 8.0 | Trimellitic anhydride |
| 4.0 | 4,4-diaminodiphenylmethane |

The medium was heated, reaching a temperature of 200 °C, maintained for 30 minutes. Sequentially, the medium was cooled to 160 °C and a new loading of materials was carried out, with the same compounds and the same amounts as in the first phase of this stage, to complete the process of formation of the imide moiety. The conditions were maintained until kinematic viscosity at 30 °C of 60 to 65 seconds was reached.

After the formation of the imide moiety was completed, the resulting polymeric material was dissolved in phenylpolyglycol ether.

At the end of dissolution, the additives were added, as shown in Table 12:

**Table 12: Additive components**

| **Concentration (kg/L)** | **Component** |
|---|---|
| 0.6 | Tetrabutyl titanate |
| 0.1 | Diluted acrylic resin solution |
| 0.05 | Antioxidant additive |
| 0.15 | Phenolic resin |
| 0.7 | Reactive phenolic resin based on bisphenol/ formaldehyde |

After the additivation stage was completed, the resin was diluted with the solvents mentioned in Table 13:

**Table 13: Solvents used in dissolution**

| **Concentration (kg/L)** | **Component** |
|---|---|
| 41.0 | Phenyl Polyglycol Ether |
| 0.5 | Isobutanol |
| 6.5 | 3,5,5-trimethyl-2-cyclohexen-1-one |
| 10.0 | Alkylbenzene |

The results obtained from tests with the resulting product were:

| |
|---|
| • Kinematic viscosity: 60 to 63 seconds; |
| • Rotational Viscosity: 600 to 700 cPs; |
| • Solid content: 36 to 37%; |
| • Copper plate appearance: without craters and spots. |

## Claims

1. METHOD OF OBTAINING INSULATING COATING COMPOSITION **characterized by** comprising the steps of:
i) polyesterification reaction, by the formation of isolated polyester in situ in a solid medium by loading the reaction medium with monomers of at least one acidic component, in a concentration range of 5% to 10%; monomers of at least one alcoholic component, in a range of 3% to 25%; and at least one catalyst, in a range of 0.01% to 1.0%, under heating from 180 to 260 °C until an acid number of less than 5 mgKOH/g is reached;
ii) polycondensation reaction comprising:
a) formation of the imide moiety in situ in a solid medium by loading the reaction medium with monomers of at least one acidic component, in a range of 8% to 18%; and monomers of at least one amine component, in a range of 2% to 10% under heating from 180 to 260 °C, for 1 to 8 hours;
b) cooling the medium to a temperature range between 120 and 180 °C, with new loading of the reaction medium with monomers of at least one acidic component, in a range of 8% to 18%; and monomers of at least one amine component, in a range of 2% to 10%, until the medium reaches a kinematic viscosity in the range of 50 to 80 seconds;
iii) dissolving the material resulting from step II, preferably using at least one organic solvent chosen from phenol, glycol ethers, dimethylglycol, ethylglycol, isopropylglycol, butylglycol, methyldiglycol, ethyldiglycol, butyldiglycol, 3,5,5-trimethyl-2-cyclohexen-1-one, alkylbenzene, phenyl glycol, glycol ether esters, methyl glycol acetate, butyl glycol acetate, methoxypropylacetate;
iv) additivation by incorporating at least one additive at a temperature below 100 °C, preferably selected from a curing additive, chain-increasing additive and antioxidant additive;
v) adjustment of viscosity by adding an organic solvent, diluent or a combination thereof, at a temperature below 100 °C.

2. METHOD, according to claim 1, **characterized in that** said acidic component is preferably chosen from terephthalic acid, tricarboxylic acid anhydride, trimellitic anhydride (TMA), 3,4,4'-benzophenone tricarboxylic acid anhydride or 3,4,4'-biphenyl tricarboxylic acid anhydride, tetracarboxylic dianhydride in combination with tricarboxylic acid anhydride, or a combination thereof.

3. METHOD, according to claim 2, **characterized in that** said tetracarboxylic dianhydride is chosen from among pyromellitic dianhydride (PMDA), 3,3'4,4'-benzophenone-tetracarboxydidianhydride (BTDA), boxyl dianhydride (DSDA), 4,4'-oxydiphalic dianhydride (ODPA) and dianhydride 3,3',4,4'-diphenylsulfone tetracarboxylic acid.

4. METHOD, according to claim 2, **characterized in that** said tetracarboxylic dianhydride can be chosen from butane tetracarboxylic dianhydride or oralicyclic tetracarboxylic dianhydride, when in combination with carboxylic acid ester anhydride.

5. METHOD, according to claim 1, **characterized in that** said alcoholic component is preferably a polyhydric alcohol preferably selected from dihydric alcohols (ethylene glycol EG), neopentyl glycol, 1,4-butanediol, 1,6-hexanediol, or 1,6-cyclohexane dimethanol; (trihydric alcohols, such as: glycerin; trimethylolpropane; or pentaerythritol) and alcohols with an isocyanurate ring (tris(hydroxymethyl)isocyanurate; tris(2-hydroxyethyl)isocyanurate (THEIC); tris(3-hydroxypropyl) isocyanurate).

6. METHOD, according to claim 1, **characterized in that** said catalyst is selected from an organic titanate, cerium compounds and organic acids.

7. METHOD, according to claim 6, **characterized in that** said catalyst consisting of organic titanate is selected from tetramethyl titanate, tetraethyl titanate, tetraisopropyl titanate, tetrapropyl titanate, tetrabutyl titanate, tetraamyl titanate, tetrahexyl titanate, diisopropyl titanate, dibutyl titanate or amyl titanates, such as tetraphenyl titanate, tetracresyl titanate, tetrahexyl titanate, triethanolamine titanate.

8. METHOD, according to claim 6, **characterized in that** said catalyst consisting of organic acid is preferably p-toluene sulfonic acid.

9. METHOD, according to claim 1, **characterized in that** said amine component is chosen from primary aliphatic diamines (ethylenediamine, propylene diamine, tetramethylene diamine, pentamethylene diamine, hexamethylene diamine, cycloaliphatic diamines, 4,4'-dicyclohexylmethane diamine, and triamines); secondary amines; aromatic amines (diaminodiphenyl methane, phenylene diamine, polynuclear aromatic amines or toluene diamines); functionalized amines (amino alcohols, monoethanol amines, monopropanol amines), amino acids (glycine), aminocaproic acids or aminobenzoic acids and esters thereof; amide of C-carboxy-3-oxocycloalkyl carboxylic acid and aromatic diamine groups with three or more aromatic rings.

10. METHOD, according to claim 1, **characterized in that** said amine component is preferably an aromatic diamine with three or more aromatic rings chosen from: 2,2-bis(4-(4-aminophenoxy) phenyl propane (BAPP); bis-4-(4-aminophenoxy)phenylsulfone (BAPS), bis-4-(4-aminophenoxy)phenylether (BAPE), fluorenediamine (FDA), 4,4'-bis(4-aminophenoxy)bisphenyl (BAPB) and 1,4-bis(4-aminophenoxy)benzene, isomers thereof, and a combination thereof.

11. METHOD, according to claims 1 and 10, **characterized in that** said amine component is optionally 4,4'-diaminodiphenylmethane (DAM) or 4,4'-diaminodiphenyl ether (DDE) in combination with the aromatic diamine having three or more aromatic rings.

12. METHOD, according to claim 1, **characterized in that** said organic solvent is optionally polypropylene carbonate, phenylpolyglycolether, cyclic esters (e.g. gamma-butyrolactone), dimethylformamide, N,N-dimethylacetamide and N-methylpyrrolidone.

13. METHOD, according to claim 1, **characterized in that** said organic solvent is optionally benzyl alcohol, alone or in combination with phenol, glycol ethers, dimethylglycol, ethylglycol, isopropylglycol, butylglycol, methyldiglycol, ethyldiglycol, butyldiglycol, 3,5,5-trimethyl-2-cyclohexen-1-one, alkylbenzene, phenyl glycol, glycol ether esters, methyl glycol acetate, butyl glycol acetate, methoxypropyl acetate.

14. METHOD, according to claim 1, **characterized in that** said organic solvent is optionally replaced by up to 40% by co-solvents.

15. METHOD, according to claim 1, **characterized in that** said preferred curing additive is tetrabutyl titanate.

16. METHOD, according to claim 1, **characterized in that** said preferred chain-increasing additive is preferably made based on toluene diisocyanate.

17. METHOD, according to claim 1, **characterized in that** said preferred curing additive is a phenolic resin.

18. METHOD, according to claim 1, **characterized in that** other additives can optionally be chosen from: defoamers, dispersants, levelers, acidity regulators and stabilizers.

19. METHOD, according to claim 1, **characterized in that** said diluent is preferably chosen from: glycol ethers, isopropyl glycol, butyl glycol, methyldiglycol, ethyldiglycol, butyldiglycol, 3,5,5-trimethyl-2-cyclohexen-1-one, alkylbenzene.

20. INSULATING COATING COMPOSITION, obtained by the METHOD as defined in claims 1 to 19, **characterized by** comprising polyester and polyesterimide, in a ratio of polyester and imide groups in the range of 60:40 to 80:20, respectively.

21. COMPOSITION, according to claim 20, **characterized by** being preferably obtained from the formulation of 2 to 30% acid by weight, 5 to 50% alcohol by weight, 3 to 35% amine by weight, 0.01 to 2.5% catalyst by weight, 15 to 75% solvent by weight and 1 to 10% additive by weight.

22. COMPOSITION, according to claim 20, **characterized in that** the product consisting of such COMPOSITION preferably has an average numerical molar mass (Mn) greater than 5000.

23. COMPOSITION, according to claim 20, **characterized in that** the product consisting of such COMPOSITION preferably has a polydispersity index greater than 1.10.

24. COMPOSITION, according to claim 20, **characterized in that** the product consisting of such COMPOSITION preferably has a solids content between 34.0 and 40.0%.

25. CONDUCTIVE MATERIAL, preferably cylindrical in shape, **characterized by** comprising a coating COMPOSITION as defined in claim 20.
